(19) **Europäisches Patentamt / European Patent Office / Office européen des brevets**

(11) **EP 4 748 691 A1**

(12) # EUROPEAN PATENT APPLICATION

(43) Date of publication:
**27.05.2026 Bulletin 2026/22**

(21) Application number: **24223134.8**

(22) Date of filing: **23.12.2024**

(51) International Patent Classification (IPC):
***B62D 57/02*** *(2006.01)*

(52) Cooperative Patent Classification (CPC):
**B62D 57/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.11.2024 EP 24214984**

(71) Applicant: **Ecole Polytechnique Fédérale de Lausanne**
**1015 Lausanne (CH)**

(72) Inventors:
- **POLZIN, Max**
  **8006 Zürich (CH)**
- **HUGHES, Josie**
  **1025 St-Sulpice VD (CH)**

(74) Representative: **Debay, Damien**
**Gsmart-IP SA**
**Route de Florissant 81**
**1206 Genève (CH)**

(54) **COMPLIANT ROBOT WITH ACTIVE AND PASSIVE RECONFIGURATION**

(57) The present invention concerns a compliant Robot comprising a frame (1), a payload (2) and locomoting wheels (3) for driving as a rover or swimming, characterized in that the frame (1) comprises at least two elastic rods each configured in the shape of a ring, both rings being assembled together by short connectors (10) and long connectors (11), thereby defining a repetitive eye-shape pattern around the circumference of the rings, the robot further comprising tendons (4) actuated by winches (5) and pulling on short connectors (10) at tight locations while the wheels (3) are mounted on long connectors (11)

**Fig. 1**

EP 4 748 691 A1

**Description**

The present invention concerns the field of robotics.

Robotic locomotion has shown significant advancements, yet robots still lack some versatility and agility in varied terrains. This limits their applicability in complex environments where they could be highly beneficial. Existing robots typically rely on intricate perception systems to construct detailed models of both the robot and its surroundings. Although the exploration of multi-modal, terrain-adaptive robots is growing, their capacity for morphological reconfiguration often remains confined to specific body parts or comes at the expense of increased system complexity and reduced locomotion efficiency.

The ability to autonomously traverse and locomote across terrains of varying gradient, and to overcome obstacles or extreme surfaces, remains a problem in the field of autonomous robots. Despite significant advances in robotic locomotion and exploration, the versatility, efficiency, and autonomy of robots typically limit their application to a small range of pre-known terrains or 'environmental niches'. Through advances in robotic hardware, planning methods, and learning algorithms, robots are beginning to be able to operate in geometrically complex and dynamic environments. Yet, robots still lack the robustness and adaptability to respond to varied and challenging terrains. However, the demand for robots that can operate reliably under diverse and unpredictable environmental conditions is increasing, in particular for diverse environments such as water, land and mountains, on earth or other planets. Amid increasingly severe climate events, there is a growing need for robots capable of providing support or rescue in the aftermath of landslides, earthquakes, and volcanic eruptions. In all of these scenarios, the terrain is complex, varied, and not always known in advance. By developing robots that can efficiently operate across a range of terrains, the use of robots can be extended to such applications, with the potential for significant scientific, societal, and safety impacts.

Active reconfiguration of robots has been explored but it is generally limited to some parts of the robot or to modularity facing the problem of a challenging dynamic adaptation or low speed. In addition, the changes to the underlying passive properties and morphology in the prior art are often limited, such that the range of environments in which these robots can operate robustly remains low.

In this context, one purpose of the present application is to overcome at least part of the drawbacks of the prior art by providing a robot which is able to reconfigure its morphology in order to adapt to a broad range of environments and overcome obstacles of various natures.

This purpose is reached by a compliant robot comprises a frame, a payload with a control unit controlling locomoting wheels for driving as a rover or swimming, characterized in that the frame comprises at least two elastic rods each configured in the shape of a ring, both rings being assembled together by short connectors and long connectors on which said wheels are mounted, thereby defining a repetitive eye-shape pattern around the circumference of the rings, with the wheels centered in eyes of this pattern, the robot further comprising tendons actuated by winches and pulling on tight locations, said tendons being controlled by said control unit to continuously and progressively deform and alter the shape of the robot from a flat rover configuration to a sphere configuration that protects said wheels and said payload.

According to another feature, said connectors are rigid and prevent both translation and rotation of the rods of the frame along their own axes.

According to another feature, said wheels are rimless.

According to another feature, said wheels comprise branches having an extended surface in a direction orthogonal to the movement of the branches.

According to another feature, said tendons comprise at least two tendons, each tendon being connected to the frame in least a pair of locations, each location of a pair being diametrically opposed with respect to the center of the frame,

According to another feature, said control unit controls the tendons such that a first tendon pulls on the frame along a first axis more than at least a second tendon to obtain an oblong shape of the frame in the flat rover configuration, which is deformed to the sphere configuration by actuation of at least a second tendon exerting a pulling force along a second axis mainly orthogonal to said first axis.

According to another feature, said winches allow relaxing the tendons quickly from an at least partially spherical configuration to said flat rover configuration, to enable the elastic rods induce a jump of the robot.

Short Description of the figures:

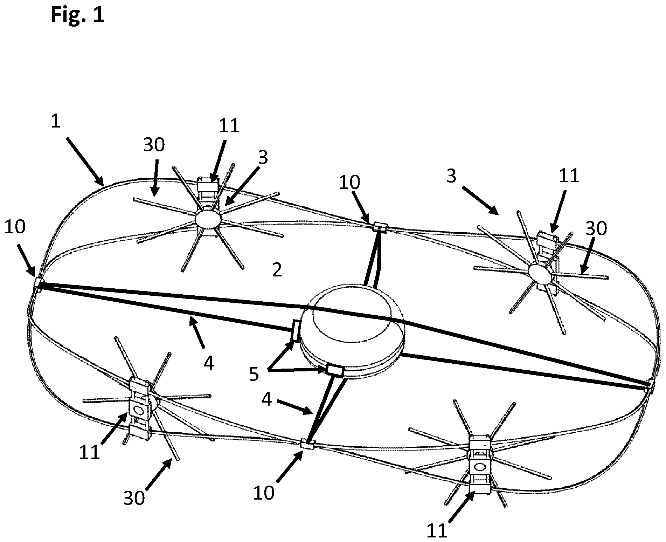

-    Figure 1 shows a compliant robot according to preferred embodiments of the invention;
-    Figure 2A shows the active reconfiguration of a compliant robot according to preferred embodiments of the invention, while figures 2B and 2C show reconfigurations of non-compliant robots;
-    Figure 3A shows the length (gap width) of longitudinal and transverse tendons during the reconfiguration and Figure 3B illustrates the forces in each tendon during this reconfiguration.

The present invention proposes a bio-inspired approach to leverage reconfiguration of a robot to adapt its morphology to the environment.

In the present invention, the active reconfiguration of the robot leads to a change in its underlying passive properties, such that the active reconfiguration of the robot's morphology enables control over the robot's passive properties and the resulting autonomous behavior.

The compliant robot comprises a frame (1), a payload (2) with a control unit controlling locomoting wheels (3) for driving as a rover or swimming, characterized in that the frame (1) comprises at least two elastic rods each configured in the shape of a ring, both rings being assembled together by short connectors (10) and long connectors (11), thereby defining a repetitive eye-shape pattern around the circumference of the rings, the robot further comprising tendons (4) actuated by winches (5) and pulling on short connectors (10) )at tight locations while the wheels (3) are mounted on long connectors (11), said tendons (4) being controlled by said control unit to continuously and progressively deform and alter the shape of the robot from a flat rover configuration to a sphere configuration that protects said wheels (3) and said payload (2). In preferred embodiments, said connectors (10,11) are rigid and prevent both translation and rotation of the rods of the frame along their own axes.

It will be understood that the winches connecting the tendons to the frame are located at or around said payload such that the latter is suspended within the frame, for an optimal protection.

Generally, the robot is configured such that said tendons (4) comprise at least two tendons, each tendon (4) being connected to the frame (1) in least a pair of locations, each location of a pair being diametrically opposed with respect to the center of the frame (1). Of course, it is possible to use two pairs of tendons, with each tendon of a pair pulling on one side of the frame and the other pulling on the other side, but this would require more winches and can be avoided by the fact that the tendons are for example tethers or cables sliding around the frame at the location of their connection to it (see below). Such connection can indeed comprise a loop enabling a stable position (i.e., without translation along the rods' axes) of the tendon on the frame, such that a single tendon pulled and released by a single winch can actuate both opposite sides of the frame.

Preferably, said control unit controls the tendons (4) such that a first tendon pulls on the frame (1) along a first axis more than at least a second tendon to obtain an oblong shape of the frame (1) in the flat rover configuration, which is deformed to the sphere configuration by actuation of at least a second tendon exerting a pulling force along a second axis mainly orthogonal to said first axis. It will be noted that the orthogonal axes of deformation of the frame allows in fact two flat rover configurations with orthogonal driving direction and able to fold as a sphere, which enables the robot to change its direction or mode of locomotion fast and conveniently. If more wheels than the four shown in the examples and more tendons are present, the robot may be able to switch between more direction, depending on the deformation of the frame applied by the tendons (which can be connected to the frame at the short connectors but also at the long ones, in more complex embodiments).

Generally, the locations at which the tendons are connected to the frame are at (or close to) the short connectors to impinge the shape regularly. Also, it should be noted that, in the flat rover configuration, the second tendon generally doesn't pull on the frame at all so that it remains generally flat, but other configurations are possible depending on the number of tendons and their locations on one of the rings or both, such that the term "flat" is not limiting in the present application.

Preferably, this robot is fabricated from elastic rods (for example fiberglass or any plastic or metal material sufficiently elastic and resistant for the reconfiguration detailed herein), connectors, and electrically driven winches and wheels, to form a meter-scale compliant robot. The robot structure leverages 'lens-like' structures (e.g., eye-shape pattern) to control the torsional stiffness, enabling the structure to reconfigure from a flat rover for driving to a spherical form with its wheels tucked inside. The term payload is used in the present application to designate the fact that the robot can be loaded with suitable elements for performing its functions, such as a processing or control unit for controlling the direction to which the robot moves, by actuating the wheels for moving in various directions and by actuating the winches for controlling the reconfiguration into a spherical shape. However, the term payload also means that the robot is able to support other loads such a battery for powering the components of the robot but also, for example, such as objects to be carried somewhere by the robot. In preferred embodiments, the control unit, the battery and the winches (5) are all held on the central payload (2). As illustrated in the example of the figures, the robot comprises at least two tendons with directions orthogonal to each other, such as longitudinal tendons and transverse tendons. Although two tendons are enough, more tendons can be added. In addition, the transverse and longitudinal tendons preferably have a path on opposite faces of the payload, that is, one on each opposite faces of the ring (with the respect to the plane of the ring in the unfolded "flat rover" configuration) but other configurations with various locations of each tendon, for example with one tendon per location is of course possible, in particular depending on the chosen angle between each tendon (radially with respect to the center of the rings).

Generally, if the rod thickness is increased, the robot can carry more payload; but morphing into a ball requires more energy, respectively becomes infeasible because the rods break. Thus, the rod thickness and flexibility will be adapted to the skills desired and/or to the tasks to be performed by the robot, depending on the need of carrying load and necessary ability to move best over rough terrain. To enable the reconfiguration, there is a trade-off between frame compliance and payload capacity; higher stiffness supports heavier payloads but reduces compliance and increases the energy needed for morphing. The selected frame stiffness represents a compromise between these factors to support the 1.8kg payload while enabling robust locomotion and efficient morphing. For the two following, non-limiting, examples of configurations, the robot can transform nicely into a ball and move over rough terrain:

- Frame made of 2x 4m rods that are 5mm thick, i.e. robot diameter is ~1.3m, the suspended payload in the center can weigh around 2kg.
- Frame made of 2x 2m rods that are 3mm thick, i.e. robot diameter is ~0.6m, the suspended payload in the center can weight around 1.5kg.

In preferred embodiments, said connectors (10, 11) and rigid and prevent the rods of the frame (1) from translating and rotating along and around their own axes. In some embodiments, said wheels (3) are rimless. Indeed, rimless wheels prove to be efficient enough on solid ground but moreover to allow the robot to swim, as long as its payload is waterproof and floating in water (in addition to being hanging on the tendons).

Depending on various embodiments, the cross-section of the branches of the wheels may have a circular shape. However, further advantageous embodiments improve the swimming ability of robot by including branches having an extended surface in a direction orthogonal to the movement of the branches, for example as with a cross-section which is elliptic or have a shape of a rectangle or a square or a shape with a concave shape on one face, so as to enhance the surface of contact with water or liquids onto which the robot needs to swim. Indeed, the rover function doesn't require a specific shape of the wheels (which can even be rimless) while swimming is better achieved with an increased surface of contact between the branches and liquids.

In some embodiments, the winches allow relaxing the tendons quickly to enable the elastic rods induce a jump of the robot. Transitioning from spherical to rover shape using the robot's winches enables controlled stopping, however, this process takes a finite time, limiting the robot's response time to a stopping signal. When in spherical configuration, the elastic rods store potential energy, applied by the winches. Thus, exploiting for example clutches on the robot's winches enables a rapid release of the tendons, and the stored energy can be released explosively. This rapid release of energy when the robot is in a spherical configuration leads to a jumping behavior of the robot. In some examples of robots, heights of 0.5m can be reached in less than 0.3 seconds. This can offer an effective escape maneuver to overcome obstacles or other challenging settings, or enable a more immediate halt. If the robot is in a partially spherical configuration, for example, during the progressive release of the tendons' pulling tension, this quick release can still be effective in stopping and/or jumping the robot.

In a general manner, the compliance of the robot is achieved by designing the energetics of the structure appropriately and ensuring that the reconfiguration space avoids undesirable twisting or buckling modes. The continuous reconfiguration space of the robot enables rapid online adaptation for different modes of locomotion including driving, swimming, and rolling.

The robot according to the invention proved to be able to traverse complex terrains including mountainous, aquatic, and urban ones. The robot's passive properties vary from highly compliant and adaptive in its flat configuration, enabling locomotion through adaptation to the terrain, to elastic and robust in the spherical configuration, resulting in robust rolling, falling, and dropping behaviors.

By adapting its configuration and passive properties to the environment, the robot shows greater physical robustness and simplifies autonomy, enabling it to navigate autonomously with only position information.

The robot is configured for an active reconfiguration from a driving wheeled configuration into a spherical form. To achieve this, the robot's frame is fabricated from two elastic rings (for example in fiberglass or plastic or metal preferably nonoxidizing), which are connected to form a circular structure with a woven pattern.

The reconfiguration is obtained by motorized tensors, called tendons, for example formed by tethers or cables pulled and released by winches and acting on the elastic rings. Such Tendons span across the frame and are connected to a payload in the center of the robot. This payload is thus 'floating' at the center of the robot as it is hanging on the tendons linked to the surrounding frame. The tensions can for example be obtained by electric winches at the payload. In some embodiments, as illustrated in the figures, there are only two tendons, each expanding between two diametrically opposed locations of the rings, the two tendons span orthogonally to each other. However, as mentioned above, the tendons may be arranged in pairs or there can be more tendons which span radially from the center to the periphery of the ring, as long as a first tension force applied by the tendons allows, firstly, the rover configuration, preferably at least two rovers configuration with non-parallel driving direction and, secondly, a reconfiguration in sphere thanks to a second tension force substantially orthogonal to the first tension force.

This enables the frame of the robot to deform three-dimensionally and assume a spherical shape, while not twisting or buckling. Furthermore, the design of the frame must support reconfiguration in a way that allows control of the orientation and tucking of the wheels inwards to form a fully spherical shape without the wheels protruding outside the sphere.

By controlling the winch-driven tendons in a given actuation sequence, the robot is able to alter its shape in-plane for efficient and robust locomotion, and out-of-plane to compactly reconfigure into a sphere. In its spherical configuration, the payload is centrally suspended within the robot, and the wheels are folded inward towards the center of the robot.

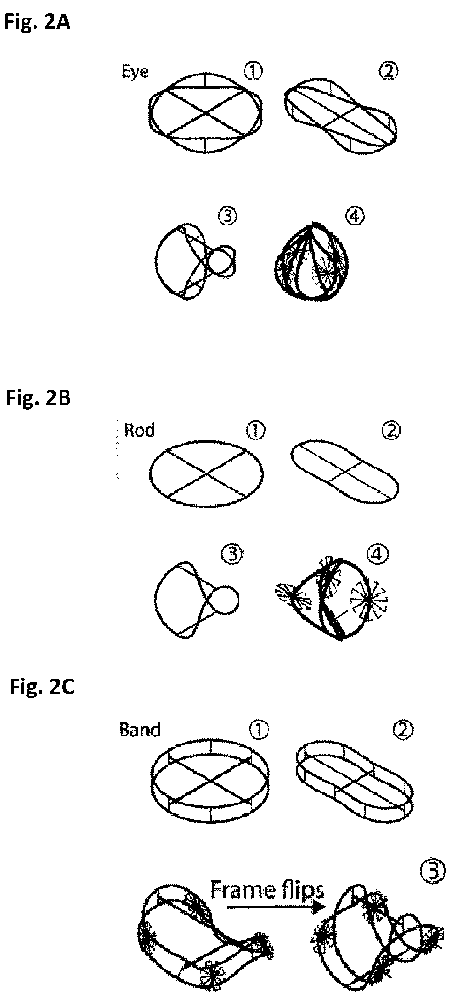

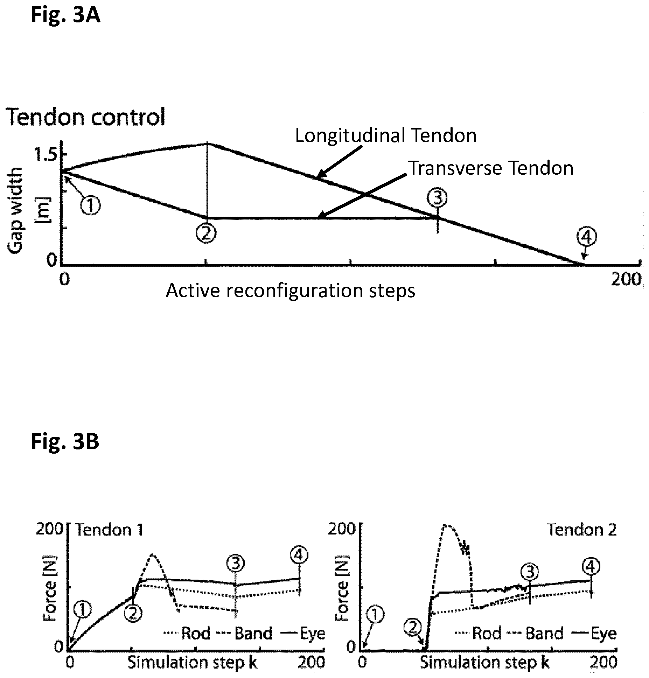

The woven pattern of the elastic rods that form the robot's frame is advantageous in that it achieves stable and unambiguous reconfiguration. Indeed, as shown in figures 2A, 2B, 2C, only the configuration of the eye-shaped (e.g., multi-lenses) frame is efficient for such compliant reconfiguration. Using finite element analysis, the deformation profiles, stability, and tendon forces can be predicted for different frame designs. To model the elastic rods that undergo large deformation, a modeling method based on absolute nodal coordinates formulation (ANCF) has been developed to offer accurate prediction of the 3D deformation while being computationally efficient. Results of such simulations are shown on figure 3A illustrating the actuation of the tendons. Alongside the 3D deformation, this adapted ANCF methods enable estimation of the flexural rigidity, torsional rigidity, and the elastic potential energy. This enables the nominal energy density distributed throughout the frame to be computed, which indicates the extent of the energy stored in different configurations. Figure 3B illustrates the forces in each tendon and thus the energy stored in, and during transition between, these configurations.

Using this analysis and the estimation of the deformation, we can determine the effects of morphing capabilities for different frame designs, to demonstrate the importance of the woven lens shape of the frame. For the same winch placement and tendon routing, but with a ring made of a single rod, the frame structure exhibits stable in-plane and three-dimensional, out-of-plane reconfiguration at low tendon forces (Fig. 2B), but as the single rod is free to rotate around its toroidal (central) axis, the wheel orientation is not constrained. Therefore, the wheels are not folded away when reconfiguring into a sphere. To constrain the wheel orientation during reconfiguration, the frame may be designed as a band structure (as illustrated in figure 2C) comprised of two elastic rings rigidly connected with constant separation. This configuration demands considerably higher tendon forces for reconfiguration. In addition, during out-of-plane deformation, this band structure tends to become unstable, leading to a flipping of the band, which obstructs complete reconfiguration.

The present description and especially the following paragraphs refer to non-limiting examples of tests performed on some configurations of the robot as described above, for example in terms of size, shape, weight or intrinsic properties, but these details should not be considered as limiting the invention since they mainly are proofs of the skills of the robot and its compliance.

The frame of the robot is constructed from two fiberglass rings, interconnected to form a pattern of four symmetric, convex lenses between them. The wheels are positioned at the center of these lenses. During reconfiguration, this structure requires similarly low tendon forces as observed in the single ring structure (Fig 2b). In contrast to the band structure, it allows the frame to fully and unambiguously reconfigure into a sphere. Additionally, the orientation of the wheels is constrained, ensuring that as the frame folds into a spherical shape, the wheels face towards the robot's center. The frame of the robot allows for continuous reconfiguration, with the possible reconfiguration space defined by the length of the two winch-operated tendons. Certain tendon configurations in this reconfiguration space can lead to a twisting of the frame. By examining the torsion stiffness of the pivot point of the reconfiguring frame, we can identify the likelihood of unconstrained, unstable, and undesired twisting motion. This metric can be computed systematically across the reconfiguration space. When torsion stiffness is below zero, these structures show unwanted and unstable twisting behaviors.

Within the 'safe' reconfiguration space, there exist three regions. First, in the outer region of the tendon reconfiguration space, in-plane reconfiguration occurs. This reflects changing from a circular shape to a rover shape suitable for driving or one that fits through gaps. Second, when the tendon lengths are further reduced, out-of-plane reconfiguration occurs. The wheels of the robot lift off the ground and are folded in while the frame takes on a spherical shape. This continues until the frame is fully reconfigured into a spherical shape. Finally, there is the unstable 'twisting' region which must be avoided. When switching between different configurations, a path of tendon configurations must be chosen that avoids unstable regions. Finally, when keeping the total length of both tendons constant, the payload suspended in the robot's center can be moved independently of the robot's frame. This arrangement enables the initiation of a rolling motion by moving the center of mass of the robot without altering the overall configuration.

The robot's two main configurations, namely the spherical and rover shape, allow different forms of locomotion. The robot exploits each configuration's specific passive properties to be resilient and robust in different environments. In this section, we illustrate these passive properties and how they are key to enabling autonomous navigation in the robot's two main configurations.

In its flat configuration, the robot leverages compliance in its frame to overcome obstacles. The robot can overcome obstacles that are 14% higher than its center of mass with a success rate of 38%. Further, the compliance in the frame aids in traversing narrow gaps. The robot passively compresses to fit through openings smaller than its width, successfully passing through them if it has adequate traction and forward momentum. To evaluate this ability, the success rate for the robot passing through gaps of reducing size was evaluated. This demonstrated that the robot can successfully squeeze through gaps more than 10% smaller than its starting frame width.

In its rover configuration, the robot's compliant frame enables it to robustly maneuver in diverse environments, overcoming obstacles like steps and driving on varying slopes and surfaces. This means that the robot does not require detailed terrain analysis or complex path planning, but can leverage onboard state estimation to navigate between waypoints. Using measurements from onboard sensors (GNSS-based position sensor, inertial measurement unit (IMU)) to provide a robust estimation of its location and heading, the rover can autonomously follow a set of predefined waypoints, where a low-level path-following controller enables navigation between them. This enables the robot to autonomously traverse complex and varied terrains, as shown by the 307m path followed in Fig. 3c, where the robot autonomously follows 8 predefined waypoints. The low-level autonomous and physical compliance of the robot enable it to traverse over various challenging terrains with minimal planning. Furthermore, the planning and low-level control algorithms do not need to be specific for different terrains or topographies.

The spherical configuration of the robot enables it to cover diverse and challenging terrains, which could include significant drops, for example, from cliffs. As the payload is suspended centrally within the frame, the spherical configuration provides not only physical robustness to the robot frame, but also protects the easily damaged payload of the robot. When the robot is dropped from a height, the frame elastically absorbs the impact forces and gradually dissipates them. Initially, it deforms, before the elastic deformation in the frame leads to the robot bouncing and restoring its initial configuration. This process effectively protects both the payload and the frame from damage. To demonstrate the effectiveness of the spherical configuration, we compare the energy that is dissipated upon impact by the robot in the spherical configuration to that in the flat rover configuration. This is measured by observing the rebound height of the robot following drops from varying heights using motion capture. In the rover configuration, impact energy is dissipated by both the robot's frame and the payload upon hitting the ground. In contrast, in the spherical configuration, a portion of the kinetic energy is converted into elastic deformation upon impact, resulting in significantly less energy being absorbed by the frame and none by the payload. This effectively shields the payload, as all the energy is dissipated by the frame. While the impact energy to be dissipated increases linearly with drop height, the spherical configuration's elastic deformation reduces the total energy that must be dissipated upon impact by the frame by approximately half compared to the rover configuration.

The robot's ability for efficient and gradual energy dissipation in the spherical configuration enables the robot to undergo significant drops when rolling without damage, including drops of over 10 meters. When planning a route for the robot in this configuration, this means extreme features such as cliffs or drops do not need to be avoided but can be leveraged to offer an optimally efficient path.

This physical robustness allows the spherical form to be exploited for rolling. Rolling can be self-instigated by the robot, after which the robot follows the gradient 'autonomously', performing 'environmental computation'. While the path followed depends on the terrain and topology, significant distances can be traveled. The rolling capabilities were tested in a snow-covered mountain environment. Rolling was instigated in the same location, and the rolled trajectories were recorded for three repeats. While rolling, the robot reached velocities up to 6 m/s. In two instances, the robot covered a distance of 1.4 km.

During the top part, when rolling along a mountain ridge, the trajectories diverge but converge to the same endpoint due to the topographic features of the surrounding terrain. Note that it was not intended for the robot to end up in the same location for the rolled trajectories, but to capture the possible variability when rolling in a complex terrain.

In one other case, the robot rolled to a local topographic minimum and ended in another location. Thus, when rolling 'autonomously', the robot can follow a gradient and terrain-driven path which can be beneficial for rapidly and efficiently descending slopes.

In addition to the robot exploiting its passive properties in different configurations, to simplify autonomy and provide different means of locomotion, the robot can also exploit reconfiguration to adapt to the environment or achieve new modalities of locomotion.

When in its flat configuration, its wheels are in contact with the ground, and it can drive. Within this configuration, the length of the two orthogonal tendons can be varied to change the aspect ratio of the robot from a circle (aspect ratio, $r=l1/l2 = 1$) to a narrow figure-of-eight form ($r=6.5$). The robot's aspect ratio affects the achievable speed and drift when driving and turning. This was evaluated by recording the trajectories for forward driving and turning when the robot was in different aspect ratios. The fastest speed (1.4m/s) is achieved when the aspect ratio is such that the wheels are aligned with the direction of travel, for an aspect ratio between 2 and 3. The speed then decreases with the two extremes of aspect ratios. The positional error, or percentage drift when moving forward shows a similar relationship, with the best performance (i.e. lowest positional error) seen when the wheels are aligned with the direction of travel ($r=2.2$). When turning, the angular velocity is highest when $r=1$ and the robot is closest to a circle. As the ratio increases, it is increasingly difficult for the robot to turn. Eventually, turning is impossible when the wheels are turned inwards, as for $r=6.4$. The turning ratio similarly increases with aspect ratio. A tendon ratio of 1.4-2.2 offers a compromise in terms of forwards speed, and ease of turning. However, depending on the path of the robot, and the turning radius required, morphing within the flat configuration can aid in speed, controllability, and maneuverability of the robot.

When in the spherical configuration, the payload of the robot is suspended on the tendons within the robot. By maintaining the same total tendon length, but varying the ratio between tendon 1 and 2, the payload can be moved along the suspending tendons while maintaining the identical spherical configuration of the robot. As the payload is significant with respect to the lightweight frame, this can be used to move the center of mass outside the support polygon of the robot and instigate rolling motion. Using the encoders on the winches, this operation is automated and takes less than 15 seconds. Using motion capture, the rolling motion of the sphere can be seen for repeated trials on flat ground. The direction of rolling is determined by the motion of the payload. Rolling distance and path are approximately constant, corresponding to half the circumference of the robot. The ability to shift its center of mass enables rolling to be automatically initiated on flat, or close-to-flat slopes.

After instigating rolling, reconfiguring to a rover enables control over the distance traveled. To illustrate the repeatability of this process, for two different starting points on a grassy slope, reconfiguration from sphere to rover was instigated after a given time to reach two target goal positions. Although there is some variation, a repeatability of ±2 meters is observed. The robot's ability to actively stop rolling through morphological reconfiguration enables the integration of controlled rolling as a locomotion modality into autonomous navigation strategies.

The robot's capacity for active morphological reconfiguration enables the combination of its different locomotion modalities for efficient autonomous navigation. Three navigation strategies were considered as a means of reaching a target location mid-hill: driving directly to the target, rolling until passively stopping followed by driving to the target, and rolling, actively reconfiguring to rover when at the same height as the goal, and driving to the goal. Note that our path planning algorithm does not have prior information about the surrounding terrain available. The navigation strategies were evaluated based on the robot's ability to reach a target location on a grassy slope. For each strategy, metrics including the path taken, time elapsed, and energy consumption were measured. Driving directly to the target results in the shortest overall path of 22m. In comparison, rolling down until naturally stopping and consecutively driving uphill towards the goal, results in a path 2.5 times longer than driving directly and requires significantly more time and energy than the other strategies. Note that the surplus of energy is required because driving uphill consumes more energy than downhill. Rolling, actively stopping by reconfiguring to rover and driving towards the goal, takes less time than the other strategies despite the distance traveled being slightly larger than driving directly. Critically, we observe that the combination of rolling, active reconfiguration, and driving reduces energy consumption by a factor of four in comparison to driving directly. This demonstrates how the robot's ability for active reconfiguration allows it to leverage the advantages of each configuration to increase navigation efficiency.

By exploiting the robot's reconfiguration capabilities appropriately, the robot can operate in and transition between diverse natural environments. Two examples of real-world deployment scenarios are shown, demonstrating how morphological reconfiguration facilitates seamless access and maneuverability in various environmental contexts.

Transitioning from locomotion on land to surface swimming in water and traversing rocky terrain is challenging, due to the different locomotion modes required and the obstacles present. The robot's ability to operate in these environments was tested on a lake front of Lake Geneva in Lausanne, with a sandy, stony beach cluttered with flotsam and a surrounding wall of boulders. The robot starts driving on the beach, heading to an initial waypoint in the water, followed by returning to the beach and finally to reach the goal position traversing a wall of boulders. We combine a mix of autonomous and teleoperated operation. Using the same controllers for path following, the robot can automatically transition from a beach to a lake. Leveraging its wheels to generate thrust, it can swim and reach a specified waypoint. In water, the robot shows maneuverability leveraging its four-wheel differential drive. Its velocity in water is constant at 0.5m/s, a comparable speed to locomotion on land. However, the power consumption when swimming is 56% lower, and is far more consistent. The robot can autonomously transition from water to land, leveraging its open wheel structure. The third terrain to traverse is a wall of boulders. Although the robot can gain some traction to move over and among the boulders, it gets stuck. To get unstuck, overcome the boulders, and return to the lake, the robot was commanded to automatically take on its spherical shape and rolls back into the lake. Back floating, the robot switches back to its rover configuration and swims to the final goal location in the lake. The total distance traveled is 70m whereby the robot is covering 40m swimming, 25m driving, and 5m rolling. The robot's compliance facilitates seamless navigation across varied terrains and smooth transitions between them, while its capacity for active morphological reconfiguration allows it to effectively overcome obstacles.

The robot was deployed in the varied mountainous landscape, tasked with traversing snow-covered slopes, rugged mountains, streams, and rivers to reach a destination 4.5km away from its starting location. This scenario required the robot to engage in driving, rolling, and swimming locomotion. The robot was partially teleoperated and partially autonomous on this path, operated with a single battery charge, and changed its configuration three times. For the first section of the path, a steep slope, the robot rolled down the slope in its spherical configuration, reaching speeds up to 4m/s, the ability to follow the environment enabled a meaningful path to be autonomously followed by the robot. During these ten minutes of rolling, the only energy consumed was by the robot's onboard computer, which captured data and ran the robot's software stack. This offered a reduction by almost 90% in power consumption compared to its driving configuration. In the following 1.8km long flat section, the robot automatically transitioned into its rover configuration and autonomously followed a series of commanded waypoints. The robot drove up to 2.3m/s while consuming on average 39 Watt. When reaching a second steeper part, the robot was commanded to reconfigure back into a sphere and leverages its energy efficient rolling mode. During this experiment over 4.5km of distance was covered and around 1000m of height was descended. Over this 4.5km traverse the robot did not experience any failures nor did it get irrecoverably stuck. Finally, a river flow was leveraged to reach the final destination. The robot reconfigured into a rover to enter the stream, after which it exploits the river flow, requiring minimal power to reach its goal location. Through reconfiguring the robot can exploit the environment for control and minimize energy consumption.

The performance of the robot can be compared to other robots designated for operating across diverse outdoor environments using several metrics. The compliance of this robot enables to call it GOAT (Good Over All Terrains), since it is able to traverse complex terrains including mountainous, aquatic, and urban ones. We first focus on key metrics for terrestrial locomotion. These include efficiency metrics, such as the cost of transport, total weight, and distance per charge, and performance metrics which reflect outdoor behavior including the maximum slope that can be ascended, maximum drop height, maximum velocity on flat ground, and the payload capacity. Further, we compare performance and efficiency metrics for locomotion in aquatic environments, such as distance per charge, cost of transport, maximum velocity where possible. The energy efficiency of GOAT, as represented by its cost of transport (CoT), is higher when compared to other robots for terrestrial locomotion. The rolling locomotion mode, when rolling downhill, showcases GOAT's efficiency, being 10 times more efficient than A robot of the prior art, 26 times more efficient than M4, and 100 times more efficient than ART. In its driving configuration, the GOAT's CoT is around 30% lower than A robot of the prior art's. The GOAT weighs one-tenth of A robot of the prior art and can carry lower loads than A robot of the prior art, the only robot for which the payload capacity is reported in the literature.

In aquatic environments, the GOAT robot's cost of transport is 3.3 times lower than ART's most efficient mode, while A robot of the prior art and M4 are infeasible for aquatic locomotion. In terms of distance covered on a single charge, the GOAT demonstrates 4.5km, similar to the A robot of the prior art robot covering 2.2 km, and M4's estimated maximum range of 2.4km. The GOAT robot can swim up to 2km per charge, while ART is operated tethered. For terrestrial locomotion, the GOAT robot reaches a competitive maximum slope ascending capability of 33 degrees compared to A robot of the prior art's 21 degrees and the thruster-assisted M4's 45 degrees. It achieves a maximum velocity of 2.4 m/s while driving, twice that of A robot of the prior art's reported 1.2 m/s and is robust to drops exceeding 10 meters. The GOAT robot's maximum swimming velocity of 1.2 m/s is substantially higher than ART's 0.09 m/s. Diverse environmental adaptation strategies are employed by the compared robots: A robot of the prior art relies on precise sensing, planning, and control algorithms; M4 exhibits locomotion plasticity and has the capability to fly for short periods; ART applies adaptive morphogenesis for transitioning between land and water. Our robot optimizes navigation and energy usage through coordinated interactions with its environment by exploiting the passive properties of its compliant structure and actively reconfiguring its morphology under the influence of environmental stimuli.

The present application presents a robot that is capable of active morphological reconfiguration and passively adapting to its environment. This bio-inspired morphological reconfiguration enables different locomotion modalities including driving, swimming, and rolling. The compliance of the robot's structure offers local adaptation to obstacles in highly unstructured and uncertain environments, such that complex terrains can be covered with minimal sensing and path planning autonomously. Furthermore, in different morphological configurations, the efficiency, feasible paths, and velocity of the robot are varied, opening up a wider range of environments and terrains for navigation. In doing so, with GOAT, we demonstrated unprecedented distances of efficient travel, across many different challenging terrains. The integration of active reconfiguration with structural compliance, as demonstrated in this work, offers the potential to significantly enhance the ability of future robots to efficiently and autonomously navigate complex and challenging environments.

Technical details of preferred but non-limiting embodiments are detailed below for the example of 2 tendons actuating the frame at 4 locations defining two orthogonal tension axes and only 4 wheels interposed between these locations, but as mentioned above, more complex configuration can be provided.

The robot's frame is constructed from four straight fiberglass rods, each two meters in length and 5 mm in diameter. Fiberglass rods provide a high strength-to-weight ratio and can show significant elastic deformation before permanent deformation or breakage occurs. The fiberglass rods are rigidly connected to form two fiberglass rings with a circumference of four meters each. The two circles are stacked and connected at eight equidistant points on the circumference of each circle. Four of these joints (called short connectors above) connect both of the circles with an angle between the two circles, serving as mounting points for tendons and enabling the structure to bend and fold. Four others (called long connectors above) are rigid connections and enforce the convex, symmetrical lens structure that allows unambiguous morphological reconfiguration into a sphere and provide mounting points for the wheels. Each rigid connector is composed of two chevrons, the ends of which are attached to both circles using fixed T-joints. Each chevron is formed by two 8cm long fiberglass rods that are connected in the middle by a fixed 3d printed connector with an opening angle of 120 degrees. This combination of rigid connections enforcing geometry in the frame enables morphological reconfiguration.

Four motors are mounted to the fixed middle joints of each rigid connector's chevrons. The motors are waterproof and can supply 45kg cm-1 of torque. Each motor drives a rimless wheel, which is fabricated from a central 3d-printed hub that holds 10 spokes. The spokes are 25cm long and made from 8mm thick fiberglass rods. The number and stiffness of the spokes were chosen heuristically, with 10 relatively stiff spokes providing a good balance between smooth motion and traction across various terrains. The spoke length is chosen to be as large as possible without intersecting or touching the robot's frame when rotating.

A waterproof payload in the middle of the frame is connected to the frame of the robot by two tendons from 0.6mm polyethylene braided fishing line. The tendons span orthogonally over the frame with one tendon running above and the other below the central payload. Each tendon is guided from the central payload through an eyelet on one connector of the robot frame to an eyelet on the diametrically opposite connector and back to the central payload, where they are connected to two electric winches. These two winches can each produce 40kg cm-1 of torque and enable the lengths of each of the tendons to be independently controlled. Both winches were retrofitted with encoders to measure the absolute angular position of their spools. Under slight tension, the two tendons hold the payload of the robot in its center. Under higher tension, the tendons cause the robot's frame to deform. This property is key to enabling the robot to actively reconfigure its morphology.

All actuators, sensors, computing, and power electronics, except the motors that drive the robot's four wheels, are housed within the robot's central payload. The central payload serves as a hub for both power and data communication. The wheel motors receive their power through cable conduits running from this central payload. These conduits extend from the motors, running along the robot's frame and tendons, and converge at the central payload. The robot's actuation system consists of its four-wheel motors and the two winch motors. All motors are compatible with direct power supply from 3 S LiPo batteries. Typically, the robot is powered with a 1600mAh 3 S LiPo battery, as this battery provides a good trade-off between the robot's designated operation period, i.e., approximately 30 minutes of continuous driving or 2 hours of rolling, and operational weight. Power management, crucial for the robot's functionality, is handled by a Holybro PM02D power module. This board regulates the battery's output, stepping down the voltage from 12V to 5V, ensuring efficient energy distribution to power the robot's central processing unit and its sensors.

The robot's central processing unit, a Raspberry Pi 5 (8GB), establishes connectivity with various peripheral electronics essential for operation via the Inter-Integrated Circuit (I2C) protocol. This includes an Adafruit PCA9685 16 Channel PWM/Servo driver, which generates Pulse Width Modulation (PWM) signals for controlling the robot's winches and motors. Angular measurements of the winches are captured by two AMS AS5048B rotary position sensors. Precise acceleration, angular rate, and magnetic field measurements are obtained by an Adafruit LSM6DSOX + LIS3MDL 9-DoF IMU. Finally, a Texas Instruments INA220 current and power monitor, which is integrated into the power module, tracks the robot's power consumption metrics. For high-precision location tracking, the system integrates a Septentrio MosaicHat, connected to a lightweight ArduSimple Helical GNSS Tripleband + L-band antenna. This setup enables the acquisition of GNSS measurements at a rate of 100Hz. Real-Time Kinematic (RTK) corrections are streamed over the GSM network from the swipos-GIS/GEO service, enabling localization with sub-centimeter precision. The Raspberry Pi connects to the GSM network via a Wi-Fi connection to a TP-Link M7650 Mobile Wi-Fi, which is likewise housed in the robot's payload.

Automatic control is implemented to control the robot's electric winches and wheel motors to enable teleoperation, autonomous morphological reconfiguration, and navigation.

The electric winches control the tendon lengths. A cascaded control scheme is applied to vary the tendon lengths and allow for controlled reconfiguration of the robot's morphology to either take on a spherical shape or a shape suitable for driving. The length of each tendon can be controlled individually to follow a set reference length. A proportional gain controller is implemented to control the current tendon lengths lest,n to follow the reference length, lref,n,

$$u_{motor,n} = P_{gain} * (l_{ref,n} - \hat{l}_n) \text{ with } n \in [1, 2].$$

The controller's gain, Pgain, is determined experimentally. When a tuple of reference lengths, Tref := (lref,1, lref,2), is given to the winch controllers, both winches control the tendons to the respective reference lengths independently. For automatic morphological reconfiguration, a trajectory controller is implemented that enables synchronized control of both tendons. The morphological trajectory controller takes as input a morphological reconfiguration trajectory consisting of a series of tuples of K reference lengths, Tref,1....Tref,K. Each tuple is commanded to the low-level tendon controllers sequentially by the trajectory controller, whereby consecutive tuples are executed only if the prior tuple has been successfully reached. The execution of these morphological trajectories allows precise control of the robot's morphological state and enables the automatic execution of the morphing trajectories in the robot's morphological reconfiguration space.

Two morphological states of the robot and the transition between these states are of particular interest as they enable the robot to navigate efficiently and robustly in outdoor environments. These states are a) its flat configuration, which enables the robot to drive using its wheels and b) its spherical, curled up shape in which the robot's payload and wheels are protected, and it is able to roll. These configurations are indicated in the morphological reconfiguration diagram in Figures 2 (A to C) by markers, 2 (rover configuration), and 4 (spherical configuration). In order to transition from flat to spherical configuration and vice versa, a morphological trajectory that steers the tendons through an intermediate configuration, point 3 in the diagram, is introduced in order to ensure stable morphological reconfiguration and avoid twisting of the robot, i.e. avoid blue areas in the diagram in Fig. 2. Note that the morphological reconfiguration from rover to spherical shape is only one of the robot's features enabled by the morphological trajectory controller. Further morphological reconfigurations include in-plane reconfiguration such as elongation of the robot's frame which makes it more suitable for fast forward motion or to a more circular shape suitable for efficient and stable turning. Finally, the morphology controller allows the robot to change its center of gravity when in a spherical (and almost spherical) shape by altering the position of the payload suspended in the robot's frame. The payload makes up nearly two thirds of the robot's mass, so changing its location inside the robot's frame shifts the robot's center of gravity outside its support polygon, initiating rolling motion even on flat ground.

In its flat configuration, the robot resembles a four-wheeled, skid-steered, mobile robot whose movement and direction is controllable by differentially driving the wheels on either side of the robot, whereby the left and right side of the robot can be defined as the robot's frame and wheels which are located to the left and right side of the longer tendon. The wheels on each side move at the same speed. When the wheels on both sides are driven at the same speed and direction, the robot moves forward or backward in a straight line. Steering is achieved by varying the relative speeds of the wheels on either side, causing the robot to skid or slide as it turns. To control the skid-steered robot, input linear velocity, v, and angular velocity, $\omega$, are translated into wheel velocities by a low-level driving controller which effectively converts the desired motion into differential wheel speeds, enabling precise maneuvering of the robot.

The robot can be operated remotely and autonomously. Remote control is facilitated through a Sony Dualshock PS4 gamepad, which wirelessly connects to the robot's Raspberry Pi via Bluetooth. For autonomous navigation, the robot leverages its morphological reconfiguration capability to alternate between rolling and driving modes. We have augmented traditional navigation techniques with innovative strategies to fully utilize this feature. On slopes, rolling is preferred for its safety and energy efficiency. Hence, it is favorable for the robot to curl up and roll where feasible, only reverting to its rover configuration when rolling becomes impractical to reach its destination.

Three distinct navigation strategies were implemented using a ROS 2 Navigation2 (Nav2) framework to autonomously move towards predefined waypoints. Nav2 is a production-grade navigation framework designed for building highly reliable autonomous systems. For each navigation strategy, a high-level path planning algorithm is continuously computing the shortest path between the robot's current location and a target waypoint. Once a path is planned, a low-level controller computes motor commands to follow the planned path using a Dynamic Window Approach. The controller uses feedback from the robot's sensors to dynamically adjust the robot's speed and direction. The implemented navigation strategies differ in the integration of different high-level behaviors.

The three implemented navigation strategies are:

1. Basic navigation: The basic navigation strategy uses the default navigation behavior for skid-steered rovers implemented in Nav2. Note that for simplicity, recovery strategies as navigational behavior were disabled.

2. Reflexive approach: The second implemented strategy combines rolling and driving. Wherever rolling is possible, the robot changes to its spherical configuration and starts rolling until it stops automatically, either due to an obstacle or upon reaching flat ground. It then morphs to its rover configuration and drives towards the goal.

3. Trajectory-informed strategy: The third strategy incorporates information about the robot's prior trajectory. When rolling is feasible, the robot reconfigures into a sphere and rolls towards the target waypoint. It actively stops rolling and unfolds when closest to its destination.

The present application describes various technical features and advantages with reference to the figures and/or to various embodiments. Those skilled in the art will understand that the technical features of a given embodiment can indeed be combined with features of one or more other embodiment(s) unless the reverse is explicitly mentioned, or these characteristics are incompatible or the combination does not work. In addition, the technical features described in a given embodiment can be isolated from the other features of this mode unless the reverse is explicitly mentioned, in particular because the functional considerations provided in the present application will provide a sufficient explanation so that the structural adaptations possibly necessary are within the reach of those skilled in the art. Therefore, the embodiments described in the present application should be considered by way of illustration and the invention should not be limited to the details given

above.

ver configuration, to enable the elastic rods induce a jump of the robot.

**Claims**

1. Compliant Robot comprising a frame (1), a payload (2) with a control unit controlling locomoting wheels (3) for driving as a rover or swimming, **characterized in that** the frame (1) comprises at least two elastic rods each configured in the shape of a ring, both rings being assembled together by short connectors (10) and long connectors (11) on which said wheels (3) are mounted, thereby defining a repetitive eye-shape pattern around the circumference of the rings, with the wheels centered in eyes of this pattern, the robot further comprising tendons (4) actuated by winches (5) and pulling on tight locations, said tendons (4) being controlled by said control unit to continuously and progressively deform and alter the robot's shape from a flat rover configuration to a sphere configuration that protects said wheels (3) and said payload (2).

2. Compliant Robot according to claim 1, **characterized in that** said connectors (10,11) are rigid and prevent both translation and rotation of the rods of the frame along and around their own axes.

3. Compliant Robot according to claim 1 or 2, **characterized in that** said wheels (3) are rimless.

4. Compliant Robot according to claim 3, **characterized in that** the wheels (3) comprise branches (30) having an extended surface in a direction orthogonal to the movement of the branches.

5. Compliant Robot according to any one of the preceding claims, **characterized in that** said tendons (4) comprise at least two tendons, each tendon (4) being connected to the frame (1) in least a pair of locations, each location of a pair being diametrically opposed with respect to the center of the frame (1).

6. Compliant Robot according to any one of the preceding claims, **characterized in that** said control unit controls the tendons (4) such that a first tendon pulls on the frame (1) along a first axis more than at least a second tendon to obtain an oblong shape of the frame (1) in the flat rover configuration, which is deformed to the sphere configuration by actuation of at least a second tendon exerting a pulling force along a second axis mainly orthogonal to said first axis.

7. Compliant Robot according to any one of the preceding claims, **characterized in that** said winches (5) allow relaxing the tendons (4) quickly from an at least partially spherical configuration to said flat ro-

**Fig. 1**

**Fig. 2A**

**Fig. 2B**

**Fig. 2C**

**Fig. 3A**

**Fig. 3B**

Europäisches
Patentamt

European
Patent Office

Office européen
des brevets

# EUROPEAN SEARCH REPORT

**Application Number**

EP 24 22 3134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 114 589 686 B (UNIV SHANDONG) 10 October 2023 (2023-10-10) * abstract; figures 1,5,6,7 * | 1-7 | INV. B62D57/02 |
| A | LU LU ET AL: "Multiple equilibrium states of a curved-sided hexagram: Part II-Transitions between states", ARXIV.ORG, CORNELL UNIVERSITY LIBRARY, 201 OLIN LIBRARY CORNELL UNIVERSITY ITHACA, NY 14853, 13 July 2023 (2023-07-13), XP091941726, DOI: 10.1016/J.JMPS.2023.105407 * abstract; figures 1,3,4,5,6,7,8 * | 1-7 | |
| A | LU LU ET AL: "Multiple equilibrium states of a curved-sided hexagram:Part I-Stability of states", ARXIV.ORG, CORNELL UNIVERSITY LIBRARY, 201 OLIN LIBRARY CORNELL UNIVERSITY ITHACA, NY 14853, 13 July 2023 (2023-07-13), XP091562175, * abstract; figure 8 * | 1-7 | |
| A | CN 114 987 639 B (UNIV SHANGHAI ENG SCIENCE) 26 January 2024 (2024-01-26) * abstract; figures 1,6,7,8,9 * | 1-7 | **TECHNICAL FIELDS SEARCHED (IPC)** B62D B25J |
| A | CN 118 700 129 A (UNIV SOUTHERN SCI & TECH) 27 September 2024 (2024-09-27) * abstract; figures 2,3,4,5 * | 1-7 | |
| A | US 2023/364777 A1 (VIKAS VISHESH [US] ET AL) 16 November 2023 (2023-11-16) * abstract; figures 1A-1D,4,5,8,9 * | 1-7 | |

The present search report has been drawn up for all claims

| Place of search | Date of completion of the search | Examiner |
|---|---|---|
| Munich | 8 April 2025 | Lumineau, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 3134

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2025

| Patent document cited in search report | | Publication date | Patent family member(s) | Publication date |
|---|---|---|---|---|
| CN 114589686 | B | 10-10-2023 | NONE | |
| CN 114987639 | B | 26-01-2024 | NONE | |
| CN 118700129 | A | 27-09-2024 | NONE | |
| US 2023364777 | A1 | 16-11-2023 | NONE | |

EPO FORM P0459

For more details about this annex : see Official Journal of the European Patent Office, No. 12/82